(19) **Europäisches Patentamt**

**European Patent Office**

**Office européen des brevets**

(11) **EP 1 024 606 A2**

(12) **EUROPEAN PATENT APPLICATION**

(43) Date of publication:
02.08.2000 Bulletin 2000/31

(51) Int. Cl.[7]: **H04B 7/005**

(21) Application number: 00300370.4

(22) Date of filing: 19.01.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **29.01.1999 US 240220**

(71) Applicant:
**LUCENT TECHNOLOGIES INC.**
**Murray Hill, New Jersey 07974-0636 (US)**

(72) Inventors:
• **Koo, Yuen-Yin L.**
**Morristown, New Jersey 07960 (US)**

• **Kuo, Wen-Yi**
**Morganville, New Jersey 07751 (US)**
• **Meyers, Martin Howard**
**Montclair, New Jersey 07043 (US)**
• **Weaver, Carl Francis**
**Township of Hanover, New Jersey 07950 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(54) **Open loop power control for wireless mobile stations**

(57) The present invention is an apparatus and method for calculating the transmit power of a mobile station by including an interference correction term in every access probe of the mobile station to more correctly estimate the path loss. The interference correction term accounts for the presence of base station pilot signals when calculating the transmit power. Importantly, the present invention is implementable in any CDMA based communication system. In an exemplary embodiment of the present invention, a mobile station implements open loop power control by determining an interference correction term that accounts for the detection of non-active-set pilot signals, thermal noise, or non-CDMA interference, one or more of which are indicated by the detection of a given receive threshold. The mobile station then adjusts its open loop transmit power (access probe power in access state) based on the interference correction term. In a further embodiment, the interference correction term is limited to a maximum level of correction for the case when an active pilot is not detected. In an additional embodiment, the non-active-set pilot power is approximated to all received pilots other than the largest active-set pilot.

FIG. 3

EP 1 024 606 A2

## Description

### Field Of The Invention

This invention relates to the field of wireless communications and in particular, to code division multiple access based communication systems.

### Background Of The Invention

Wireless mobile communications provide the greatest convenience for users to access voice and data services essentially anywhere and anytime. Code Division Multiple Access ("CDMA") communication systems are one of the most promising digital wireless communication systems technologies for providing a desired mix of voice and data services. CDMA modulation techniques permit a large number of system users to communicate with one another.

In typical CDMA systems, communication is achieved by using spreading sequences for each transmission channel that modulate the information bits to be transmitted between two communication units, for example, between base stations and mobile stations. This results in a plurality of transmitted signals sharing the same frequency. Proper operation is based on each signal being time and/or frequency coded with a spreading sequence, such as with a pseudo-random noise ("PN") sequence, to permit signal separation and reconstruction at the receiver. Particular transmitted signals are retrieved from the communication channel by despreading a signal from all of the signals by using a known user despreading sequence related to the spreading sequence implemented at the transmitter.

The geographic coverage provided by these communication systems typically divides coverage areas into cells, where each cell corresponds to a base station. The cell is then further divided for certain types of base stations into multiple sectors, where each sector uses multiple carrier channels to transmit voice or data bits to other communication units. Each base station has a unique pilot signal that serves as a beacon for mobile radios or mobile stations that are in the base station's cell. In practical field deployment, there are unavoidable situations in some areas that result in the coexistence of several dominant pilots. That is, several base stations have roughly equal path loss to the same area.

In current implementations of the IS-95 standard, the mobile station estimates the initial transmit power required to access a base station based on the total received power from all base stations, a characteristic which is easily measured at the mobile station. The objective is to estimate the path loss to the base station, so that the mobile station signal will arrive at the base station at an optimum signal level. If the signal level based on the estimate is too large, other users will be interfered with and the system capacity will be reduced. If the signal level is too small the signal will not get through to the base station. The estimate based on total received power is often too small when a significant part of the mobile station received signal is either noise or interference from other cell sites. This can result in failed access probes and poor service such as failed origination and termination attempts.

### Summary Of The Invention

The present invention is an apparatus and method for calculating the transmit power of a mobile station by including an interference correction term in every access probe of the mobile station to more correctly estimate the path loss. The interference correction term accounts for the presence of base station pilot signals when calculating the transmit power. Importantly, the present invention is implementable in any CDMA based communication system.

In an exemplary embodiment of the present invention, a mobile station implements open loop power control by determining an interference correction term that accounts for the detection of non-active-set pilot signals, thermal noise, or non-CDMA interference, one or more of which are indicated by the detection of a given receive threshold. The mobile station then adjusts its open loop transmit power (access probe power in access state) based on the interference correction term. In a further embodiment, the interference correction term is limited to a maximum level of correction for the case when an active pilot is not detected. In an additional embodiment, the non-active-set pilot power is approximated to all received pilots other than the largest active-set pilot.

### Brief Description Of The Drawings

A more complete understanding of the present invention may be obtained from consideration of the following description in conjunction with the drawings in which:

FIG. 1 is a representative block diagram of a typical wireless network;

FIG. 2 is an exemplary flowchart illustrating communication between a mobile radio and a base station;

FIG. 3 illustrates an exemplary implementation of an interference correction term in accordance with the present invention; and

Fig. 4 represents and exemplary embodiment of a mobile station in accordance with the present invention.

## Detailed Description

Although the present invention is particularly well suited for a CDMA system and shall be so described, the present invention is equally well suited for use with other systems including Wideband CDMA (W-CDMA).

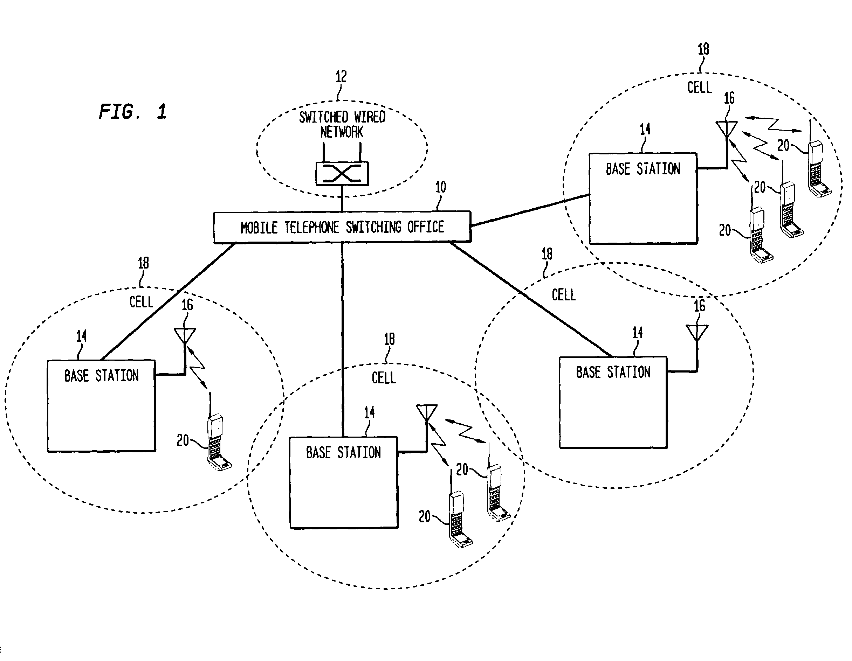

Referring now to FIG. 1 there is shown a representative block diagram of a typical cellular wireless network. A Mobile Telephone Switching Office (MTSO) 10, also know as a Mobile Switching Center (MSC), operates to switch calls between a cellular network and a switched wired network 12. The MTSO 10 controls operation of a cellular system, e.g., setting up and monitoring cellular calls, tracking the location of cellular-equipped vehicles traveling in the system, arranging hand-offs, and providing billing information.

The MTSO 10 is coupled to a plurality of cellular base stations 14. Cellular base station 14 is a fixed position multi-channel transceiver in the wireless network, that is coupled through a radio port to a cellular antenna 16. The geographical area for which cellular base station 14 acts as the communication gateway is called a cell 18. Various cellular base station cell nodes are distributed in suitable locations. Each cellular base station 14 has a uniquely identified pilot channel that provides a reference for any cellular mobile units, mobile stations or mobile radios 20 that are in the cell 18. Mobile radio 20 communicates with the cellular base station 14 within the cell 18 through a forward link (base station to mobile) and a reverse link (mobile to base station).

In the reverse link or uplink, there are a number of traffic channels and access channels. The access channel enables a mobile to communicate nontraffic information, for example, to originate calls and to respond to paging. As stated above, each base station 14 transmits a pilot signal of constant power on the same frequency. The power level of the received pilot signal enables a mobile, e.g., mobile radio 20, to estimate the path loss between base station 14 and mobile radio 20 since the power level of the transmitted pilot signal is known. Knowing the path loss, mobile radio 20 adjusts its transmitted power such that base station 14 will receive the access probe or traffic signal at a requisite power level. Controlling and adjusting the transmit power by measuring the received power is sometimes referred to as open loop power control.

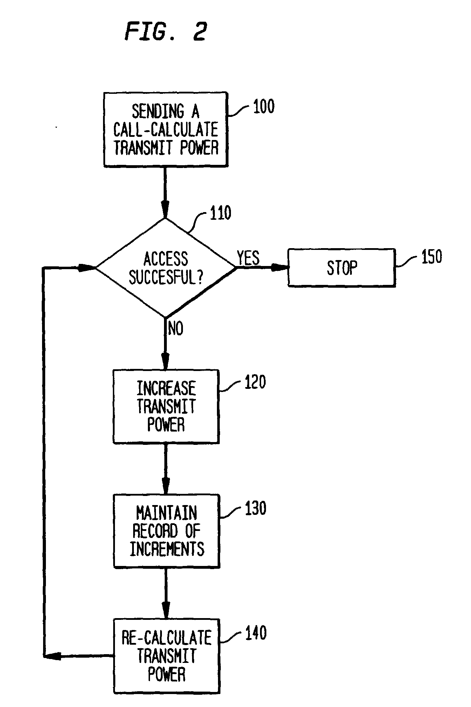

Specifically, with reference to FIG. 2, when a mobile radio 20 attempts to access a base station on the reverse or uplink access channels (step 100), it transmits at a power level which will typically be determined as follows:

$$P = P_{mean} + NOM\_PWR + INT\_PWR - P\_CNST \text{ dBm}$$

where

$P_{mean}$ is the mean input power of the mobile radio transmitter;

NOM_PWR is the nominal correction factor for the base station;

INT_PWR is the correction factor for the base station from partial path loss decorrelation between transmit and receive frequencies; and

P_CNST equals 73, a constant as per the IS-95A standard.

If the access is unsuccessful (step 110), then mobile radio 20 will increase its power by a given power value (step 120), where 4 dB is a typical increment. Mobile radio 20 will maintain a record of the number of unsuccessful attempts and the sum of all corrections, which are referred to as access probe corrections (step 130). A new access probe is then transmitted with the corrected transmitted power (step 140). This continues until a communication link has been made or until the access attempt procedure terminates (step 150). A typical number of attempts will be two, due to deterioration of the link quality of the current active pilot, although, as would be understood, the mobile may be programmed for many more attempts. When mobile radio 20 transmits on the reverse traffic channel, it then uses a power of

$$P = P_{mean} + NOM\_PWR + INT\_PWR - P\_CNST \text{ dBm} + \text{sum of all access probe corrections.}$$

The open loop power control calculations presented above typically underestimate the path loss in the presence of multiple pilot signals having approximately the same signal strength. This is because the pilot signals from several base stations interfere with each other and with little motion or shadow fading change, the relative signal strength changes significantly. Consequently, the existence of several dominant pilots has a negative effect on access success rate.

A common characteristic of an area having multiple dominant pilots is that the signal strength from several base stations 14 are within a close range of each other, such as within 3 to 6 dB. This can have detrimental effects on call origination and termination. For example, if mobile radio 20 originates or responds to a page in the area having multiple dominant pilots, mobile radio 20 can only lock on to one pilot signal from one base station 14. Mobile radio 20 sends out access probes to the locked on base station 14 to request services. Desirably, mobile radio 20 will within a couple of seconds of call processing go into soft hand-off to secure the call. Before the call is secured and soft hand-off occurs, mobile radio 20 is operating in simplex, talking with only the locked on base station 14. Because the relative signal strength from the one base station 14 can change rapidly and significantly, the call may be killed before it is secured. As a consequence, proper transmit power levels are needed quickly and accurately during such operation.

In an exemplary embodiment of the present invention, mobile radio 20 introduces an interference correction term to account for the presence of multiple pilots, other interference, or noise having approximately the same signal strength. In the exemplary embodiment, the interference correction term is essentially the ratio of the total received power to the sum of active-set pilot power, where the active set is the set of pilots that the mobile station is demodulating or despreading. Additional embodiments approximate the sum of the active-set power to the largest active-set pilot power, or apply constraints to the interference correction. Specifically, mobile radio 20 will calculate the transmit power or mean output power levels in accordance with the following expression:

$$\text{mean output power (dBm)} = -\text{ mean input power (dBm)} -73 + \text{NOM\_PWR (dB)} + \max(\text{nom\_ecio}-E1,0)$$

where,

E1 is the sum of the active set of pilots $E_c/I_o$s (in linear units), and as stated the active set is the set of pilots that the mobile station is demodulating or despreading; and

nom_ecio is an adjustable noise and external interference term, that is typically set at -7 dB. More specifically, nom_ecio is a threshold which "turns on" the correction only after the total receive power reaches a given threshold level, for example, five times the active pilots. This is done so that the interference correction doesn't reduce the open loop power when in less than hill load situations. Since hill load is typically assumed to have a 20% pilot (-7dB) from the transmitter, then nom_ecio would be -7dB. For wideband CDMA this constant may need to change, where for example:

$E1=10*\log10(10^{(e1/10)}+...+10^{(en/10)})$ where { e1, e2, e3 ... en} are the set of active pilots which can be no larger than 6.

A significant advantage of the inclusion of the interference correction term according to the present invention is a reduction in access probe failure or a reduction in system interference due to excessively large access probe power that would be needed to provide a sufficient margin with respect to a less accurate estimate of path loss.

In another embodiment of the present invention, the interference correction term includes a correction for noise and external interference in the calculation of mean output power as previously described, where the correction term is max (nom_ecio-E1,0), where E1 is the largest of the active set of pilots $E_c/I_o$. By using the largest of the active set of pilots, the interference correction may be overestimated in a soft hand off state (when the active set size is greater than one). As would be understood, this overestimate can always be corrected by closed loop power control. Moreover, by using only the largest pilot, implementation (and corresponding processing) will be simpler in the mobile station.

In yet another embodiment of the present invention, the mobile transmit power is calculated in accordance with the following expression:

$$\text{mean output power (dBm)} = -\text{ mean input power (dBm)} -73 + \text{NOM\_PWR (dB)} + \min(\max(\text{nom\_ecio}-E1,0)\ \text{max-cor})$$

where,

E1 is the largest of the set of active pilots;

nom_ecio is an adjustable noise and external interference term, that is typically set at -7 dB; and

max-cor is an adjustable parameter which limits the maximum correction available. This protects against the transmission of large undesired probes when in access state and the active pilot (there is only one in access state) is either not detected or is detected at an extremely small value due to a deep fast fade.

In still another embodiment of the present invention, the interference correction term is applied in all states of mobile station operation. This would include both the access state and traffic channel states. As would be understood, this type of implementation will provide for start up in the traffic channel state, before closed loop power control begins, and would provide for a more general and simple definition of the open loop control.

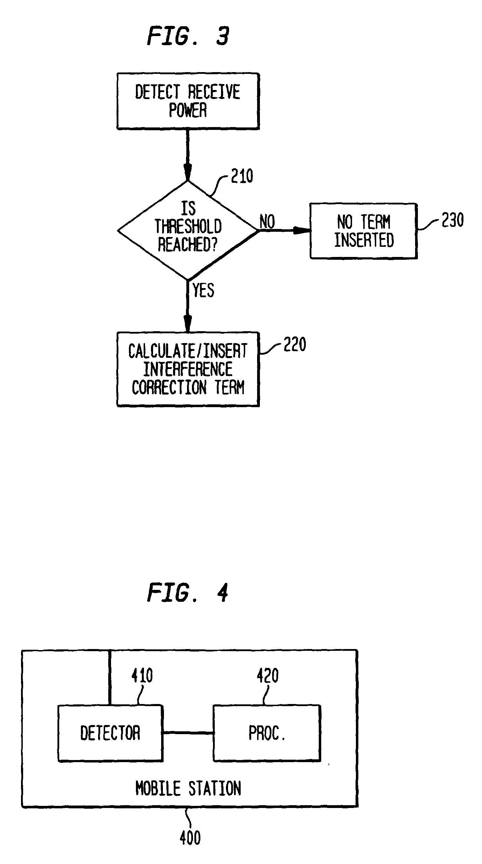

Referring to Fig. 3, one exemplary embodiment for the calculation of transmit power in accordance with the present invention is shown. As shown in step 210, a mobile station in accordance with the present invention will determine whether a given threshold value for received power, for example, five times the active pilots, has been detected. If the threshold value is reached or has been exceeded, an interference correction term as previously described will be inserted into the power calculation expression (step 220). If the threshold value for received power is not met, then the interference correction term will not be inserted (step 230). By using the total receive signal in relation to either the largest active pilot or active pilot sum, a problem of missed detection of pilots is reduced. This makes the implementation simpler and also better, since many times pilots are present but not detected.

Referring to Fig. 4, a block diagram of mobile station 400 in accordance with the present invention is shown. As can be seen, the mobile station includes a power detector 410 for determining the power level of a received pilot signal and for determining the number and power level of received pilots if more than one pilot signal is detected. A processor 420, for example, a digital microprocessor (and associated memory) or digital microcontroller is coupled to the power detector. Depending on the data received from the power detector 410, the processor 420 calculates the output power level of the mobile station in accordance with the methodology previously described in connection with Figs. 2 and 3.

Numerous modifications and alternative embodiments of the invention will be apparent to those skilled in the art in view of the foregoing description. Accordingly, this description is to be construed as illustrative only and is for the purpose of teaching those skilled in the art the best mode of carrying out the invention. Details of the structure may be varied substantially without departing from the spirit of the invention and the exclusive use of all modifications which come within the scope of the appended claim is reserved.

## Claims

1.  A method for providing open loop power control in a mobile station, said method comprising the steps of

    sensing a receive power level at said mobile station based on receive power which includes one or more pilot signals and received interference components if present,

    determining whether said receive power level reaches or exceeds a given threshold level;

    determining an active pilot set from said receive power;

    upon determining that said receive power level reaches or exceeds said given threshold, calculating an interference correction term based on a relationship between said active pilot set and said receive power; and

    transmitting a signal from said mobile station having a transmit power based on inclusion of said interference correction term if said threshold level is reached or exceeded.

2.  The method according to claim 1, wherein said step of determining said active pilot set includes the step of determining a largest detected pilot power and said interference correction term is the ratio of the total detected pilot power to the largest detected pilot power.

3.  The method according to claim 1, wherein said interference correction term is max (nom_ecio-E1,0), where E1 is the sum of the set of active pilots and nom_ecio is a threshold for an adjustable noise and external interference term.

4.  The method according to claim 1, wherein said interference correction term is max (nom_ecio-E1,0), where E1 is the largest of the set of active pilots and nom_ecio is a threshold for an adjustable noise and external interference term.

5.  A method for linking a mobile radio with a base station, said method comprising the steps of:

receiving a signal from the base station at the mobile radio;

sensing a receive power level at said mobile station based on receive power which includes one or more pilot signals and received interference components if present,

estimating a path loss by determining an interference correction term in an area where a receive power level reaches or exceeds a given threshold level

determining an active pilot set from said receive power, wherein said interference correction term is calculated based on a relationship between said active pilot set and said receive power; and

transmitting a mobile station signal to the base station, said mobile station signal having a transmit power based on said interference correction term if said threshold level is reached or exceeded.

6. The method according to claim 1 or 5, wherein said interference correction term is included in each access probe transmission.

7. A system for providing open loop power control in a mobile station, comprising:

detection means for determining an interference correction term in an area where a receive power level reaches or exceeds a given threshold level, wherein said interference correction term estimates path loss, said detection means sensing a receive power level at said mobile station based on receive power which includes one or more pilot signals and received interference components if present, said detection means further determining an active pilot set from said receive power, and

processing means for calculating a transmit power for an output signal that accounts for the presence of said at least two pilot signals by including said interference correction term, said interference correction term being calculated based on a relationship between said active pilot set and said receive power.

8. The invention according to claim 5 or 7, wherein said interference correction term is the ratio of the total detected pilot power to the largest detected pilot power.

9. The invention according to claim 5 or 7, wherein said interference correction term is max nom_ecio-E1,0), where E1 is the sum of the set of active pilots and nom_ecio is an adjustable noise and external interference term.

10. The invention according to claim 5 or 7, wherein said interference correction term is max (nom_ecio-E1,0), where E1 is the largest of the set of active pilots and nom_ecio is an adjustable noise and external interference term.

11. The invention according to claim 1,5 or 7, wherein said interference correction term is min(max (nom_ecio-E1,0) max-cor), where E1 is the largest of the set of active pilots, nom_ecio is an adjustable noise and external interference term and max-cor is an adjustable parameter which limits the maximum corrections available.

12. The invention according to claim 1,5 or 7, wherein said interference correction term changes with time as the relative strengths of said at least two pilot signals change.

13. The invention according to claim 1 or 7, wherein said interference correction term is used to change an initial voice channel power with respect to a successful access probe if the relative pilot strength changes.

14. The invention according to claim 1 or 7, wherein said interference correction term accounts for noise and external interference.

FIG. 1

## FIG. 2

SENDING A CALL-CALCULATE TRANSMIT POWER — 100

ACCESS SUCCESFUL? — 110

YES → STOP — 150

NO

INCREASE TRANSMIT POWER — 120

MAINTAIN RECORD OF INCREMENTS — 130

RE-CALCULATE TRANSMIT POWER — 140

## FIG. 3

DETECT RECEIVE POWER

IS THRESHOLD REACHED? ~210

NO → NO TERM INSERTED ~230

YES → CALCULATE/INSERT INTERFERENCE CORRECTION TERM ~220

## FIG. 4

410
420

DETECTOR — PROC.

MOBILE STATION

400